# EUROPEAN PATENT SPECIFICATION

(11) **EP 4 246 656 B1**
(45) Date of publication and mention of the grant of the patent: **18.03.2026**
(21) Application number: 22837953.3
(22) Date of filing: 06.07.2022
(51) Int. Cl.: H01M 10/42, H01M 10/44, H01M 10/48, H01M 10/04, G01B 5/30

(54) **BATTERY MODULE PRESSING TEST DEVICE AND METHOD**
BATTERIEMODULDRUCKTESTVORRICHTUNG UND -VERFAHREN
DISPOSITIF ET PROCÉDÉ DE TEST DE PRESSION DU MODULE DE BATTERIE

(30) Priority: 09.07.2021 KR 20210090253
(43) Date of publication of application: 20.09.2023
(73) Proprietor: LG Energy Solution, Ltd., Seoul 07335 (KR)
(72) Inventor: NOH, Yu Han, Daejeon 34122 (KR); LEE, Su Hang, Daejeon 34122 (KR); KIM, Yong Il, Daejeon 34122 (KR); KIM, Dong Wook, Daejeon 34122 (KR)
(74) Representative: Goddar, Heinz J.
(86) International application number: PCT/KR2022/009713
(87) International publication number: WO 2023/282601

(56) References cited:
- EP-A1- 3 783 378
- EP-A1- 4 151 982
- CN-U- 210 607 516
- KR-A- 20200 043 225
- KR-A- 20200 059 483
- KR-A- 20210 055 363
- KR-B1- 101 841 803

## Description

### [Technical Field]

The present invention relates to a device and a method for performing a pressure test on a battery module.

The present application claims the benefit of priority based on Korean Patent Application No. 10-2021-0090253 dated July 9, 2021.

### [Background Art]

Recently, secondary batteries capable of being charged and discharged have been widely used as energy sources for wireless mobile devices. In addition, the secondary batteries are getting attention as energy sources for electric vehicles and hybrid electric vehicles which are proposed as measures to address the air pollution of conventional gasoline and diesel vehicles using fossil fuels. Therefore, types of applications using the secondary batteries are diversifying due to the advantages of the secondary batteries, and it is expected that the secondary batteries are applied to more fields and products in the future than now.

Secondary batteries may be classified into lithium ion batteries, lithium ion polymer batteries, and lithium polymer batteries according to the composition of an electrode and an electrolyte, and among these batteries, the use of the lithium ion polymer battery, which is less prone to leakage of the electrolyte and easy to manufacture, is increasing. Generally, according to a shape of a battery case, the secondary battery is classified into a cylindrical battery in which an electrode assembly is installed in a cylindrical metal can, a prismatic battery in which an electrode assembly is installed in a prismatic metal can, and a pouch-type battery in which an electrode assembly is installed in a pouch-type case of an aluminum laminated sheet. The electrode assembly installed in the battery case is formed with a structure of a positive electrode, a negative electrode, and a separator interposed between the positive electrode and the negative electrode and is a power generation element capable of being charged and discharged. The electrode assembly is classified into a jelly-roll type electrode assembly in which a separator is interposed between a positive electrode and a negative electrode, which are long sheets coated with an active material, and is wound, and a stack type electrode assembly in which a plurality of positive and negative electrodes, each having a predetermined size, are sequentially stacked with a separator interposed therebetween.

In particular, an electric vehicle or the like uses high-output electric energy, and thus a plurality of battery modules per vehicle are required. In a state in which a plurality of battery cells are connected in series or in parallel in the battery module, the battery module is mounted in a module case.

The battery module applies stress to the module case as the battery cells in the battery module repeatedly swells according to repeated charging and discharging. When the stress is continuously applied to the module case, fatigue accumulates in a welded portion of the module case, and thus a phenomenon in which the welded portion is damaged occurs. Therefore, it is necessary to perform a simulation test for fatigue evaluation on the welded portion of the module case.

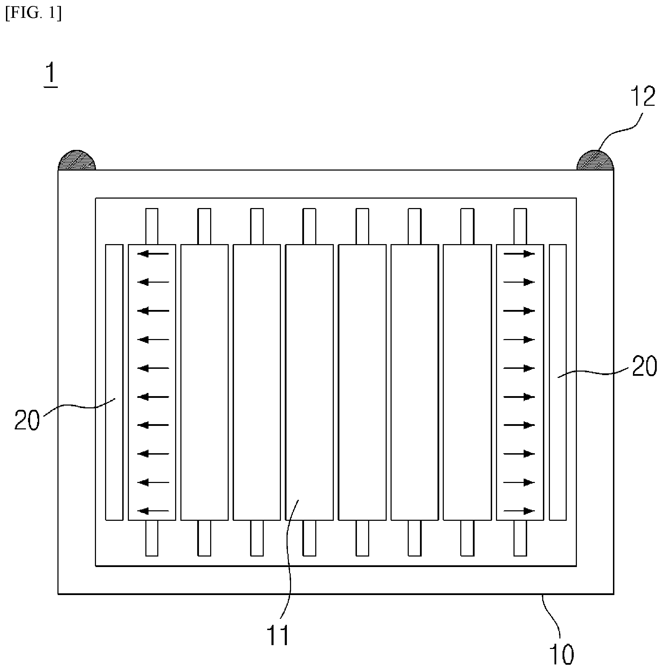

FIG. 1 is a schematic diagram illustrating a structure of a conventional device for performing a pressure test on a battery module.

Referring to FIG. 1, a conventional device 1 for performing a pressure test on a battery module uses a method of directly simulating an actual battery module. Specifically, in the device 1 for performing a pressure test on a battery module, a plurality of battery cells 11 are disposed in parallel in a module case 10, and a buffer pad 20 may be provided between the outermost battery cell and the module case. In addition, welding is performed on the module case to seal and fix the module case, and thus a welded portion 12 is formed.

In the device for performing a pressure test on a battery module, a charging/discharging cycle of the battery cell is repeated to swell the battery cell so that a degree of fatigue of the welded portion is measured through the stress applied to the module case. However, in this case, since the repeated charging and discharging takes a long time, there is a problem in that the performance of one test takes an excessively long time. In addition, there is a problem in that it is difficult to control the degree of swelling of the battery cell and the resulting pressure.

EP 4 151 982 A1 and EP 3 783 378 A1 respectively describe devices for and methods of performing a pressure test on a battery module in accordance with the independent claims.

### [Related Art Document]

### [Patent Document]

Korean Registered Patent No. 10-2146075

### [Disclosure]

### [Technical Problem]

An object of the present invention is to provide a device and a method for performing a pressure test on a battery module, which simulate a pressure due to swelling of a battery cell applied to the module case in a short time and easily control a pressure.

### [Technical Solution]

In one embodiment of the present invention, there is provided a device for performing a pressure test on a battery module, which includes a module case in which a plurality of battery cells are accommodated wherein the battery cells are pouch-type battery cells or prismatic battery cells, a pressure plate installed in a middle portion of the module case in a width direction and configured to pressure the battery cells toward the module case, a pressure driver configured to apply a pressure to the pressure plate, and a controller configured to control a pressure force and a pressure pattern with respect to the battery cells, wherein the pressure plate simulates expansion and contraction of the battery cells by repeatedly pressurizing and depressurizing the battery cells.

The pressure plate may pressurize or depressurize the battery cells in the same direction as a swelling direction.

The pressure driver may include a hydraulic pump and a pressure member connected to the hydraulic pump to pressurize a pressure plate and the battery cells.

A buffer pad may be disposed between the module case and a battery cell located at an outermost portion among the battery cells accommodated in the module case.

The device for performing a pressure test on a battery module may further include a pressure sensor configured to measure a pressure applied to an inner surface of the module case facing the battery cells of the module case.

The device for performing a pressure test on a battery module may further include a displacement sensor located outside the module case and configured to measure a displacement of the module case according to the pressure.

The pressure plate may be provided as two or more pressure plates disposed in the length direction of the battery cell to pressurize the battery cell with the same pressure or different pressures.

The pressure member may be provided as two or more pressure members disposed in the length direction of the battery cell to pressurize the battery cells with the same pressure or different pressures.

The device for performing a pressure test on a battery module further includes a welding fatigue tester configured to test a state of the welded portion formed in the module case.

The device for performing a pressure test on a battery module may further include a charging/discharging part configured to charge and discharge the plurality of battery cells.

The charging/discharging part may measure charging/discharging performance of the battery cells according to a pressure condition.

In addition, according to the present invention, a method of performing a pressure test on a battery module is provided.

In another embodiment of the present invention, there is provided a method of performing a pressure test on a battery module, which includes mounting a plurality of battery cells being pouch-type battery cells or prismatic battery cells on the above-described device for performing a pressure test on a battery module, repeatedly pressurizing and depressurizing the battery cells in the same direction as a swelling direction using a pressure plate and simulating expansion and contraction of the battery cells, and measuring a state change of a module case according to the pressurizing and depressurizing of the battery cells.

The measuring of the state change of the module case may include measuring a displacement of the module case according to pressurizing and depressurizing.

The measuring of the state change of the module case includes measuring a state change of a welded portion formed in the module case.

The method of performing a pressure test on a battery module may further include charging and discharging the plurality of battery cells, measuring charging and discharging performance of the battery cell according to a pressure condition, and deriving an optimal pressure level from the charging and discharging performance.

### [Advantageous Effects]

According to the present invention, since a pressure plate and a pressure driver, which are able to simulate swelling of the battery cell, are installed inside the battery cell, it is possible to simulate that a pressure due to the swelling of the battery cell is applied to the module case in a short time and to apply a pressure of a desired level.

### [Brief Description of the Drawings]

FIG. 1 is a schematic diagram illustrating a structure of a conventional device for performing a pressure test on a battery module.
FIG. 2 is a block diagram illustrating a configuration of the device for performing a pressure test on a battery module according to one embodiment not according to the claims.
FIGS. 3 and 4 are schematic diagrams illustrating a structure of the device for performing a pressure test on a battery module not according to the claims.
FIG. 5 is a graph illustrating an example of a pattern for pressurizing a battery cell.
FIG. 6 is a block diagram illustrating a configuration of a device for performing a pressure test on a battery module according to the present invention.
FIG. 7 is a block diagram illustrating a configuration of a device for performing a pressure test on a battery module not according to the claims.
FIG. 8 is a graph illustrating a lifetime of the battery cell according to a pressure level.
FIG. 9 is a flowchart illustrating a sequence of a method of performing a pressure test on a battery module according to the present invention.

### [Detailed Description of the Preferred Embodiments]

Hereinafter, the present invention will be described in detail. Before describing the present invention, terms or words used herein and the appended claims should not be construed to be limited to ordinary or dictionary meanings, and should be construed in accordance with the meaning and concept consistent with the technical spirit of the present invention according to the principle in that inventors can properly define concepts of terms in order to describe their inventions with the best manner.

In the present application, the terms "comprising," "having," and the like are used to specify the presence of a feature, a number, a step, an operation, a component, an element, or a combination thereof described herein, and they do not preclude the presence or addition of one or more other features, numbers, steps, operations, components, elements, or combinations thereof. In addition, when a portion of a layer, a film, a region, a plate, or the like is referred to as being "on" another portion, this includes not only a case in which the portion is "directly on" another portion but also a case in which still another portion is present between the portion and the other portion. Conversely, when a portion of a layer, a film, a region, a plate, or the like is referred to as being "under" another portion, this includes not only a case in which the portion is "directly under" another portion but also a case in which still another portion is present between the portion and the other portion. In addition, in the present application, being disposed "on" may include the case of being disposed not only on an upper portion but also on a lower portion.

Meanwhile, in the present application, a "length direction" means a direction in which an electrode lead of a battery cell protrudes.

Hereinafter, the present invention will be described in detail.

### (First Embodiment)

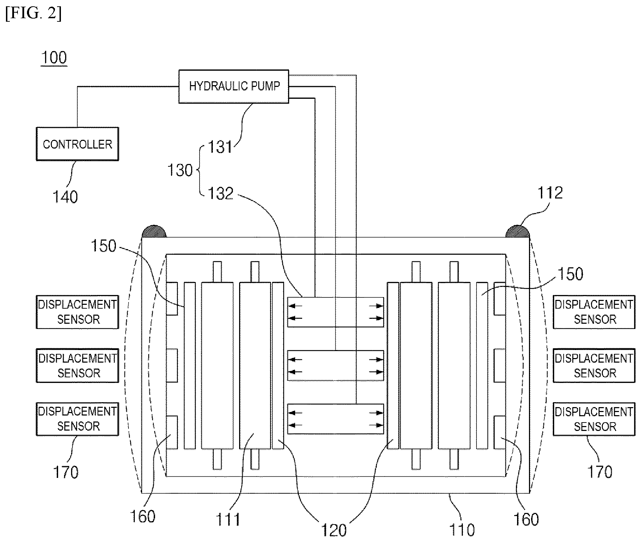

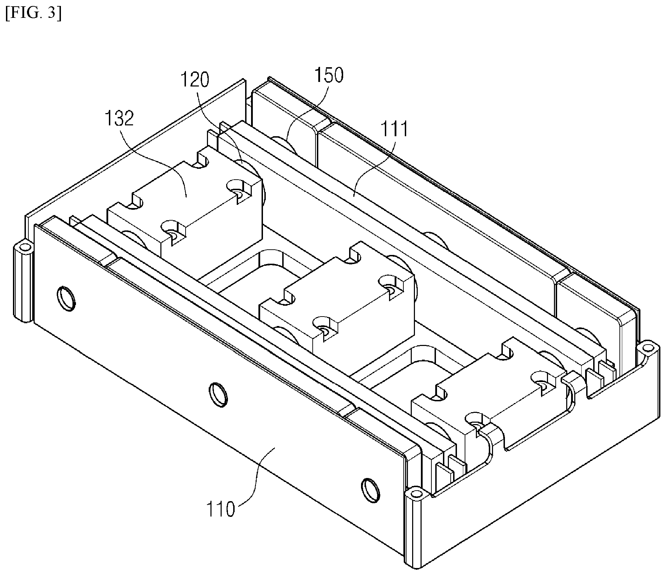

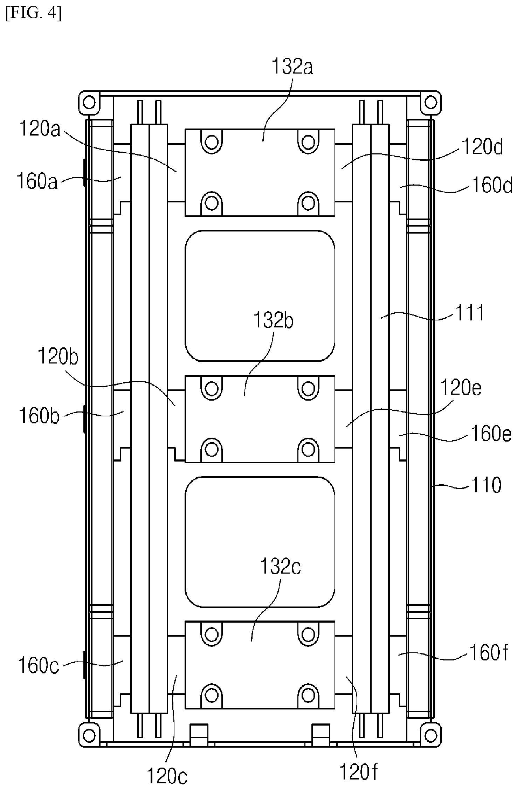

FIG. 2 is a block diagram illustrating a configuration of the device for performing a pressure test on a battery module according to one embodiment not according to the claims. and FIGS. 3 and 4 are schematic diagrams illustrating a structure of the device for performing a pressure test on a battery module not according to the claims.

Referring to FIGS. 2 to 4, a device 100 for performing a pressure test on a battery module (not according to the claims) includes a module case 110 in which a plurality of battery cells 111 are accommodated, a pressure plate 120 installed in a middle portion of the module case 110 in a width direction and configured to pressure the battery cell 111 toward the module case 110, a pressure driver 130 configured to apply a pressure to the pressure plate 120, and a controller 140 configured to control a pressure force and a pressure pattern with respect to the battery cell 111, and the pressure plate 120 simulates expansion and contraction of the battery cell by repeatedly pressurizing and depressurizing the battery cell 111.

Since the pressure plate and the pressure driver, which are able to simulate swelling of the battery cell, are installed inside the battery module and artificially pressurize the battery cell, it is possible to simulate that a pressure due to the swelling of the battery cell is applied to the module case in a short time and to apply a pressure of a desired level.

Hereinafter, each component of the device for performing a pressure test on a battery module will be described in detail.

A device 100 for performing a pressure test on a battery module according to the present invention simulates a general battery module and has a structure in which the battery cell 111 is accommodated in the module case 110.

The module case 110 may employ the same module case as that used for a general battery module, and a metal material having excellent rigidity, such as iron or stainless steel, may be used, but a type of the material is not limited thereto.

The battery cell 111 may also employ the same battery cell as that used for a general battery module, and there is no particular limitation on its shape, but in the present invention, a pouch-type battery cell to which a surface pressure can be applied may be used. The pouch-type battery cell has a structure in which an electrode assembly is accommodated in a pouch-type battery case, electrode leads are drawn out from one end portion or both end portions of the battery case, and a sealing part is formed on an outer periphery of the battery case. A specific content related to other battery cells is known to those skilled in the art, and thus a detailed description thereof will be omitted herein.

As described above, a plurality of battery cells are mounted in the battery module, and as the battery cells are repeatedly charged and discharged, the battery cells swell repeatedly, and due to stress by the swelling, physical damage such as cracks may occur in the welded portion of the module case.

According to the present invention, in order to simulate the swelling of the battery cell, a pressure part capable of pressurize the battery cell in the module case is provided.

Specifically, according to the present invention, a pressure plate 120 for pressurizing the battery cell and a pressure driver 130 for applying a pressure to the pressure plate 120 are provided as the pressure part.

The pressure plate 120 simulates expansion and contraction of the battery cell by repeatedly pressurizing and depressurizing the battery cell 111 and pressurizes or depressurizes the battery cell 111 in the module case 110 in the same direction as a swelling direction. Accordingly, the pressure plate 120 pressurizes or depressurizes the battery cell 111 in a direction perpendicular to a wide surface of the battery case.

The pressure plate 120 is located in a middle portion of the module case 110. As described below, in order to cover the pressure member located in the middle portion, a pair of pressure plate 120 is located on both sides of the pressure member in an internal space of the module case 110. Accordingly, the pressure plate 120 pressurizes the battery cells in both directions of the module case 110.

The pressure plate 120 may employ a material without limitation as long as it has a rigid enough not to be easily deformed or damaged even when the battery cell is pressurized and has heat resistance enough not to be damaged due to heat generated from the battery cell.

The pressure driver 130 applies a pressure to the pressure plate 120.

Referring to FIG. 2, the pressure driver 130 may include a hydraulic pump 131 and a pressure member 132 connected to the hydraulic pump 131 and configured to pressurize the pressure plate 120 and the battery cell. The hydraulic pump 131 and the pressure member 132 are connected by a hydraulic pipe, and when the hydraulic pump 131 pushes a fluid in the hydraulic pipe, the pressure member 132 expands to push the pressure plate 120 to both sides of the module case 110. The pressure member 132 may be, for example, a hydraulic cylinder having a space in which a fluid for applying a hydraulic pressure may be introduced therein and repeatedly expanding and contracting according to an inflow and an outflow of the fluid, but a type of the pressure member 132 is not limited thereto. As described below, two or more pressure members 132 are disposed in a length direction of the battery cell 111, and each pressure member 132 may be connected to the hydraulic pump through a separate hydraulic pipe to independently pressurize the pressure plate. That is, since the swelling of the battery cell is simulated by directly applying a pressure to the battery cell through the pressure plate and the pressure driver without directly swelling the battery cell, there is an advantage of reducing a measurement time compared to when the battery cell directly swells and controlling a pressure pattern as desired.

As described above, when the pressure plate 120 applies a pressure in the swelling direction of the battery cell by the pressure driver 130, the battery cell 111 transfers the pressure force to the module case 110, and thus the module case 110 receives the pressure to be deformed. In this case, pressure forces superimposed by the battery cells may act on an outermost battery cell, and thus the module case 110 and the outermost battery cell may be damaged. In order to prevent the above problem, a buffer pad 150 formed of an absorbing material for protecting the battery cell 111 and the module case 110 may be disposed between the module case 110 and the outermost battery cell among the battery cells accommodated in the module case 110.

In addition, as described above, when the module case 110 is deformed due to the pressure applied thereto, the device 100 for performing a pressure test on a battery module includes a pressure sensor 160 and a displacement sensor 170 for measuring an amount and deformation degree of the pressure.

The pressure sensor 160 is located on an inner surface of the module case 110 facing the battery cell 111 and measures a pressure transferred from the outermost battery cell or the buffer pad 150. Specifically, the pressure sensor 160 is a load cell and converts and outputs a pressure applied to the load cell through a strain gauge into an electrical signal, thereby displaying the pressure. A type of the pressure sensor is not particularly limited as long as it can output a numerical value of a pressure, and for example, various types of load cells such as a beam load cell and a columnar load cell may be used.

In addition, the displacement sensor 170 is located outside the module case 110 to measure a displacement of the module case 110 according to the pressure. A type of the displacement sensor 170 is not particularly limited as long as it can measure movement of the module case according to the pressure, and for example, a linear variable differential transducer (LVDT) may be used. The LVDT is to measure a linear position according to a motion of an object, which is performed by a measurement target along a single axis in one direction and may measure a direction of the motion and a distance in which the measurement target moves.

Meanwhile, referring to FIGS. 3 and 4 along with FIG. 2, in order to simulate accurate swelling, different amplitudes of pressures may be applied to portions of the module case.

In a specific example, in the present invention, two or more pressure plates 120 may be disposed in the length direction of the battery cell to pressurize the battery cell 111 with the same pressure or different pressures. Similarly, two or more pressure members 132 are disposed in the length direction of the battery cell to pressurize the battery cell 111 with the same pressure or different pressures.

Accordingly, it is possible to accurately simulate the swelling of the battery cell in the actual battery module. In a typical pouch-type battery cell, swelling may occur due to gas generation resulting from a side reaction in which an electrolyte in the battery cell is decomposed. When the gas is excessively generated, a central portion of the battery cell is more vulnerable to deformation due to a pressure than an edge of the battery cell so that the central portion of the battery cell may swell more than both edges. In this case, a portion of the module case facing the central portion of the battery cell receives higher pressure than portions facing both edges. As described above, according to the present invention, when the swelling occurs, a greater pressure is applied to the portion (for example, the central portion of the battery cell) of the module case which receives a higher pressure than the portion (for example, the edge of the battery cell) of the module case which receives a lower pressure so that a behavior of the battery cell can be more accurately simulated.

Referring to FIGS. 3 and 4, the pressure member 132 in the form of a hydraulic cylinder may be disposed as three pressure members 132a, 132b, and 132c in a length direction of the battery cell. In response to the three pressure members 132a, 132b, and 132c, the pressure plate 120 may also be formed as a total of six pressure plates 120a, 120b, 120c, 120d, 120e, and 120f, that is, three pressure plates on each side of the pressure member. In addition, in response to the pressure member 132 and the pressure plate 120, the pressure sensor 160 are formed as a plurality of pressure sensors 160a, 160b, 160c, 160d, 160e, and 160f at positions corresponding to the pressure plates and the pressure members so that a pressure at each portion of the module case may be measured. In addition, as shown in FIG. 2, the displacement sensor 170 is also disposed as a plurality of displacement sensors 170 in the length direction of the battery cell so that a displacement of each portion of the module case 110 may be measured.

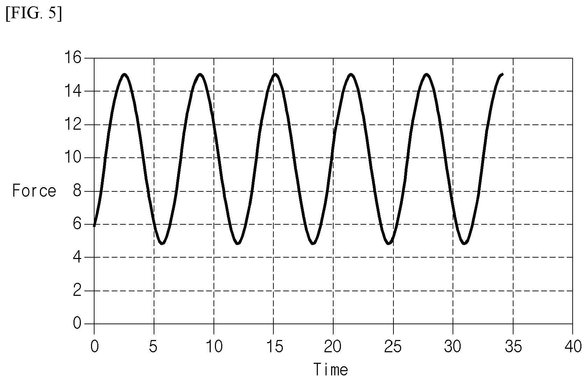

As described above, pressurizing and depressurizing the battery cell 111 may be controlled by the controller 140. The controller 140 may simulate a swelling pattern of an actual battery cell to control a pressure force and a pressure pattern of the battery cell. For example, as shown in FIG. 5, the controller 140 may control operations of the pressure plate and the pressure driver to pressurize the battery cell by varying a pressure over time in the form of a sine wave.

### (Second Embodiment)

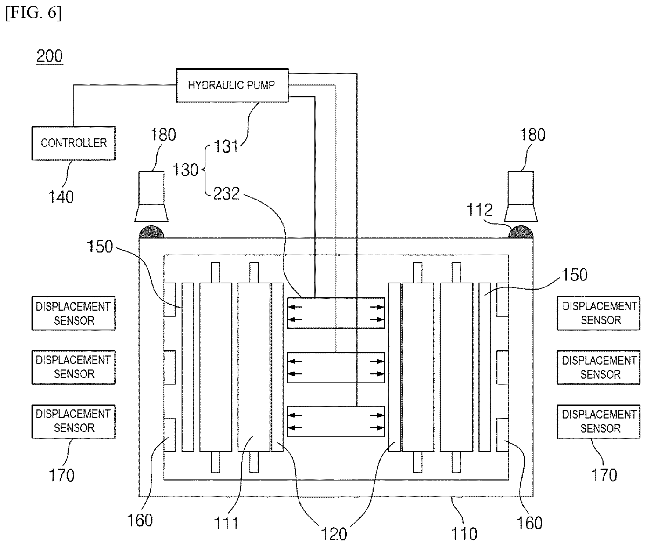

FIG. 6 is a block diagram illustrating a configuration of a device for performing a pressure test on a battery module according the present invention.

Referring to FIG. 6, a device 200 for performing a pressure test on a battery module may further include a welding fatigue tester 180 for testing a state of a welded portion 112 formed in a module case 110. Specifically, the welding fatigue tester 180 may determine a level of deformation or cracks generated due to fatigue accumulation of the welded portion 112 according to repetition of pressurizing and depressurizing.

In the present invention, a welding fatigue test may be visually performed and may also be automatically performed by a separate measuring device. For example, the welding fatigue tester may include a vision camera for photographing the welded portion. The vision camera may be used without limitation as long as it can visually detect the welded portion, such as a charge-coupled device (CCD) camera. The vision camera may photograph the welded portion, and the controller may convert the photographed image into visual data through a predetermined computing program included in the controller, represents a level of deformation or cracks occurring in the welded portion from the visual data as a numerical value, and outputs the numerical value to an external device.

### (Third Embodiment)

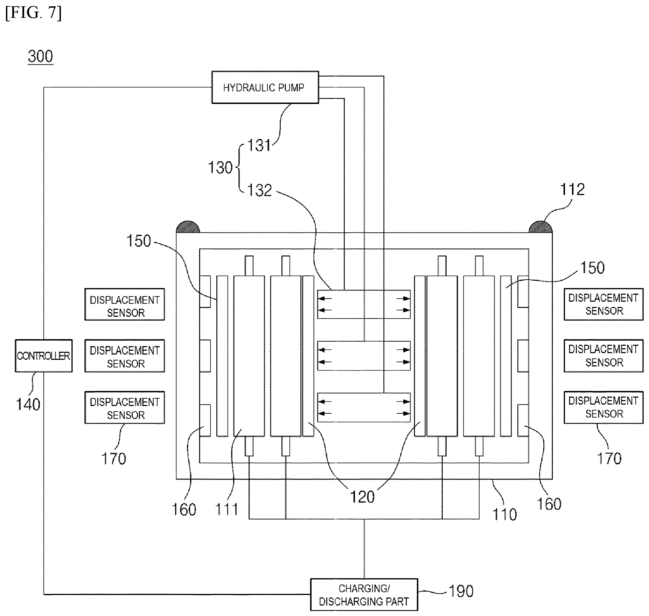

FIG. 7 is a block diagram illustrating a configuration of a device for performing a pressure test on a battery module.

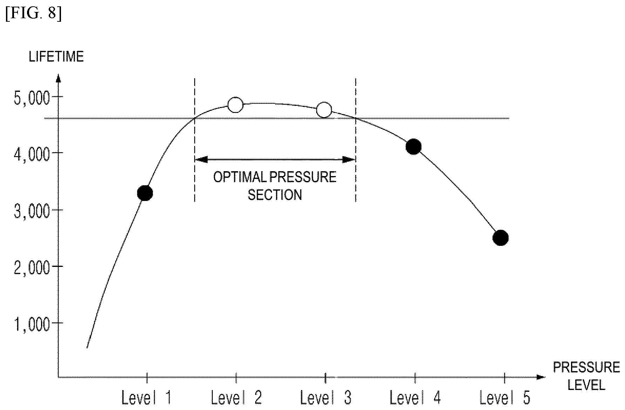

FIG. 8 is a graph illustrating a lifetime of the battery cell according to a pressure level.

Referring to FIG. 7, a device 300 for performing a pressure test on a battery module may further include a charging/discharging part 190 for charging and discharging a plurality of battery cells 111. The charging/discharging part 190 may include a power supply (not shown) connected to electrode leads of the plurality of battery cells 111 to apply a predetermined current or voltage to the battery cells 111.

Specifically, the charging/discharging part 190 serves to measure charging/discharging performance of the battery cell according to a pressure condition. Here, the charging/discharging performance of the battery cell includes a cycle characteristic according to a pressurized state of the battery cell. Specifically, as shown in FIG. 8, in a state in which the battery cell is pressurized to a predetermined level, the battery cell is charged and discharged and the charge/discharge performance is measured, and in a state in which the pressure level is changed, the battery cell is charged and discharged and the results (the charge/discharge performance) may be compared. In the case of FIG. 8, a lifetime characteristic of the battery cell was measured by dividing the pressure level into five levels. Here, the lifetime of the battery cell may be measured in various manners. For example, the lifetime may be as the number of discharging cycles when a capacity of the battery cell drops to a predetermined level. In FIG. 8, it means that a magnitude of the pressure force gradually increases from Level 1 to Level 5, and it can be seen that, as the magnitude of the pressure applied to the battery cell increases, the lifetime characteristic of the battery cell is improved, and when the magnitude of the pressure applied to the battery cell exceeds a predetermined level, the lifetime characteristic of the battery cell is reduced. From the above results, it is possible to derive a pressure condition in which the lifetime characteristic of the battery cell is maximized so that specifications and rigidity of a module/pack for deriving an optimal pressure condition can be derived.

In addition, according to the present invention, a method of performing a pressure test on a battery module.

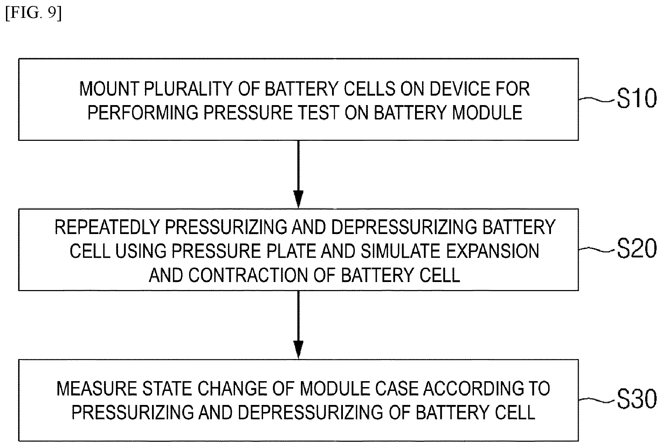

FIG. 9 is a flowchart illustrating a sequence of the method of performing a pressure test on a battery module according to the present invention.

Referring to FIG. 9, the method of performing a pressure test on a battery module according to the present invention includes mounting a plurality of battery cells on the above-described device for performing a pressure test on a battery module (S10), repeatedly pressurizing and depressurizing the battery cell in the same direction as a swelling direction using a pressure plate and simulating expansion and contraction of the battery cell (S20), and measuring a state change of the module case according to the pressurizing and depressurizing of the battery cell (S30).

Hereinafter, each process of the method of performing a pressure test on a battery module according to the present invention will be described.

### (Mounting of battery cell)

First, the plurality of battery cells are mounted on the above-described device for performing a pressure test on a battery module. As described above, the device for performing a pressure test on a battery module according to the present invention includes the module case, the pressure plate, the pressure driver, and the controller. Specifically, the pressure member connected to the hydraulic pump, which is installed outside the module case, through the hydraulic pipe is installed in a middle portion of the module case, and the pressure plate is installed at each of end portions of both sides of the pressure member. In addition, the pressure sensor and the buffer pad are installed on an inner surface of the module case. The battery cell may be mounted between the pressure plate and the buffer pad.

### (Simulation for expansion and contraction of battery cell)

When the battery cell is mounted in the module case, a process of simulating expansion and contraction of the battery cell is performed by repeatedly pressurizing and depressurizing the battery cell. The above process may be controlled by the controller of the above-described device for performing a pressure test on a battery module. The pressurizing and depressurizing of the battery cell may be performed while the pressure member repeatedly expands and contracts by the hydraulic pump. In this case, as shown in FIG. 5, a swelling behavior of the battery cell is simulated in an actual module while pressurizing and depressurizing the battery cell in a predetermined pattern. In this case, since a plurality of the pressure members and a plurality of the pressure plates may be disposed in the length direction of the battery cell, different pressures may be applied to each portion of the module case so that the behavior simulation may be more accurate.

### (Measurement of state change of module case)

As the pressurizing and depressurizing of the battery cell are repeated, stress is concentrated in and released from the module case, and the deformation of the module case is repeated. Accordingly, fatigue may accumulate in the welded portion formed in the module case, and thus deformation or cracking may occur.

In the present invention, the measuring of the state change of the module case may include measuring a displacement of the module case according to pressurizing and depressurizing. In addition, the measuring of the state change of the module case may include measuring a state change of the welded portion formed in the module case. According to the present invention, the displacement of the module case according to the pressurizing and depressurizing of the battery cell is measured, and the state change of the welded portion is measured so that it is possible to determine how much the swelling of the battery cell affects the module case and how rigid the module case is. Here, the measurement of the state change of the welded portion may be performed by measuring whether cracks occur in the welded portion or whether the welded portion is deformed. A detailed process of measuring the displacement of the module case or measuring the state change of the welded portion formed in the module case is the same as described above.

In addition, the method of performing a pressure test on a battery module, which may further include charging and discharging the plurality of battery cells, measuring charging and discharging performance of the battery cell according to a pressure condition, and deriving an optimal pressure level from the charging and discharging performance. Specific details related to the above description are the same as described above, and according to the present invention, it is possible to derive a pressure condition in which the lifetime characteristic of the battery cell is maximized so that specifications and rigidity of a module/pack for deriving an optimal pressure condition can be derived.

As described above, according to the present invention, since the pressure plate and the pressure driver, which are able to simulate swelling of the battery cell, are installed inside the battery module and artificially pressurize the battery cell, it is possible to simulate that a pressure due to the swelling of the battery cell is applied to the module case in a short time so that it is possible to design a battery module having an optimal condition.

Meanwhile, in the present specification, terms indicating upward, downward, leftward, rightward, forward, and rearward directions are used, and these terms are merely for convenience of description, and it is obvious that these terms may be changed according to a location of an object or an observer.

### (Description of Reference Numerals)

1 and 100: devices for performing pressure test on battery module
10 and 110: module cases
11 and 111: battery cells
12 and 112: welded portions
20 and 150: buffer pads
120: pressure plate
130: pressure driver
131: hydraulic pump
132: pressure member
140: controller
160: pressure sensor
170: displacement sensor
180: welding fatigue tester
190: charging/discharging part

## Claims

1. A device (100, 200, 300) for performing a pressure test on a battery module, the device (100, 200, 300) comprising:
a module case (110) in which a plurality of battery cells (111) are accommodated, wherein the battery cells (111) are pouch-type battery cells or prismatic battery cells;
a pressure plate (120) installed in a middle portion of the module case (110) in a width direction and configured to pressure the plurality of battery cells (111) toward the module case (110);
a pressure driver (130) configured to apply a pressure to the pressure plate (120); and
a controller (140) configured to control a pressure force and a pressure pattern with respect to the plurality of battery cells (111),
wherein the pressure plate (120) is configured to simulate expansion and contraction of the plurality of battery cells (111) by repeatedly pressurizing and depressurizing the plurality of battery cells (111),
**characterized by**
the device (100, 200, 300) further comprising a welding fatigue tester (180) configured to test a state of a welded portion (112) formed in the module case (110).

2. The device (100, 200, 300) of claim 1, wherein the pressure plate (120) is configured to pressurize or depressurize the plurality of battery cells (111) in a same direction as a swelling direction.

3. The device (100, 200, 300) of claim 1, wherein the pressure driver (130) includes a hydraulic pump (131) and a pressure member (132) connected to the hydraulic pump (131) to pressurize the pressure plate (120) and the plurality of battery cells (111).

4. The device (100, 200, 300) of claim 1, wherein a buffer pad (150) is disposed between the module case (110) and a battery cell (111) located at an outermost portion among the plurality of battery cells (111) accommodated in the module case (110).

5. The device (100, 200, 300) of claim 1, further comprising a pressure sensor (160) disposed at an inner surface of the module case (110) facing at least one of the plurality of battery cells (111) and configured to measure a pressure applied to the module case (110).

6. The device (100, 200, 300) of claim 1, wherein a displacement sensor (170) located outside the module case (110) and configured to measure a displacement of the module case (110) according to the pressure.

7. The device (100, 200, 300) of claim 1, wherein the pressure plate (120) is provided as two or more pressure plates (120) disposed in a length direction of the plurality of battery cells (111) to pressurize the plurality of battery cells (111) with a same pressure or different pressures.

8. The device (100, 200, 300) of claim 3, wherein the pressure member (132) is provided as two or more pressure members (132) disposed in a length direction of the plurality of battery cells (111) to pressurize the plurality of battery cells (111) with a same pressure or different pressures.

9. The device (100, 200, 300) of claim 1, further comprising a charging/discharging part (190) configured to charge and discharge the plurality of battery cells (111).

10. The device (100, 200, 300) of claim 9, wherein the charging/discharging part (190) is configured to measure charging/discharging performance of the plurality of battery cells (111) according to a pressure condition.

11. A method of performing a pressure test on a battery module, the method comprising:
mounting (S10) the plurality of battery cells (111) being pouch-type battery cells or prismatic battery cells on the device (100, 200, 300) according to claim 1 for performing the pressure test on the battery module;
repeatedly pressurizing and depressurizing (S20) the plurality of battery cells (111) in a same direction as a swelling direction using the pressure plate (120) and simulating expansion and contraction of the plurality of battery cells (111); and
measuring (S30) a state change of the module case (110) according to the pressurizing and depressurizing of the plurality of battery cells (111),
**characterized by**
the measuring (S30) of the state change of the module case (110) including measuring a state change of a welded portion (112) formed in the module case (110).

12. The method of claim 11, wherein the measuring (S30) of the state change of the module case (110) includes measuring a displacement of the module case (110) according to the pressurizing and depressurizing.

13. The method of claim 11, further comprising:
charging and discharging the plurality of battery cells (111);
measuring charging and discharging performance of the plurality of battery cells (111) according to a pressure condition; and
deriving an optimal pressure level from the charging and discharging performance.

## Patentansprüche

1. Vorrichtung (100, 200, 300) zum Durchführen eines Drucktests an einem Batteriemodul, wobei die Vorrichtung (100, 200, 300) aufweist:
ein Modulgehäuse (110), in dem mehrere Batteriezellen (111) aufgenommen sind, wobei die Batteriezellen (111) pouchförmige Batteriezellen oder prismatische Batteriezellen sind;
eine Druckplatte (120), die in einem mittleren Abschnitt des Modulgehäuses (110) in einer Breitenrichtung installiert ist und konfiguriert ist, die mehreren Batteriezellen (111) in Richtung des Modulgehäuses (110) zu drücken;
einen Drucktreiber (130), der konfiguriert ist, einen Druck auf die Druckplatte (120) auszuüben; und
eine Steuerung (140), die konfiguriert ist, eine Druckkraft und ein Druckschema in Bezug auf die mehreren Batteriezellen (111) zu steuern,
wobei die Druckplatte (120) konfiguriert ist, Expansion und Kontraktion der mehreren Batteriezellen (111) durch wiederholtes Druckbeaufschlagen und Druckentlasten der mehreren Batteriezellen (111) zu simulieren,
**dadurch gekennzeichnet, dass**
die Vorrichtung (100, 200, 300) ferner einen Schweißermüdungstester (180) aufweist, der konfiguriert ist, einen Zustand eines geschweißten Abschnitts (112) zu testen, der in dem Modulgehäuse (110) ausgebildet ist.

2. Vorrichtung (100, 200, 300) nach Anspruch 1, wobei die Druckplatte (120) konfiguriert ist, die mehreren Batteriezellen (111) in einer gleichen Richtung wie eine Aufblähungsrichtung mit Druck zu beaufschlagen oder druckzuentlasten.

3. Vorrichtung (100, 200, 300) nach Anspruch 1, wobei der Drucktreiber (130) eine Hydraulikpumpe (131) und ein Druckelement (132) aufweist, das mit der Hydraulikpumpe (131) verbunden ist, um die Druckplatte (120) und die mehreren Batteriezellen (111) mit Druck zu beaufschlagen.

4. Vorrichtung (100, 200, 300) nach Anspruch 1, wobei ein Pufferkissen (150) zwischen dem Modulgehäuse (110) und einer Batteriezelle (111) angeordnet ist, die sich an einem äußersten Abschnitt unter den mehreren Batteriezellen (111) befindet, die in dem Modulgehäuse (110) aufgenommen sind.

5. Vorrichtung (100, 200, 300) nach Anspruch 1, die ferner einen Drucksensor (160) aufweist, der an einer Innenfläche des Modulgehäuses (110) angeordnet ist, die mindestens einer der mehreren Batteriezellen (111) zugewandt ist, und konfiguriert ist, einen Druck zu messen, der auf das Modulgehäuse (110) ausgeübt wird.

6. Vorrichtung (100, 200, 300) nach Anspruch 1, wobei sich ein Verschiebungssensor (170) außerhalb des Modulgehäuses (110) befindet und konfiguriert ist, eine Verschiebung des Modulgehäuses (110) gemäß dem Druck zu messen.

7. Vorrichtung (100, 200, 300) nach Anspruch 1, wobei die Druckplatte (120) als zwei oder mehr Druckplatten (120) bereitgestellt ist, die in einer Längsrichtung der mehreren Batteriezellen (111) angeordnet sind, um die mehreren Batteriezellen (111) mit einem gleichen Druck oder unterschiedlichen Drücken zu beaufschlagen.

8. Vorrichtung (100, 200, 300) nach Anspruch 3, wobei das Druckelement (132) als zwei oder mehr Druckelemente (132) bereitgestellt ist, die in einer Längsrichtung der mehreren Batteriezellen (111) angeordnet sind, um die mehreren Batteriezellen (111) mit einem gleichen Druck oder unterschiedlichen Drücken zu beaufschlagen.

9. Vorrichtung (100, 200, 300) nach Anspruch 1, die ferner ein Lade-/Entladeteil (190) aufweist, das konfiguriert ist, die mehreren Batteriezellen (111) zu laden und zu entladen.

10. Vorrichtung (100, 200, 300) nach Anspruch 9, wobei das Lade-/Entladeteil (190) konfiguriert ist, eine Lade-/Entladeleistung der mehreren Batteriezellen (111) gemäß einer Druckbedingung zu messen.

11. Verfahren zum Durchführen eines Drucktests an einem Batteriemodul, wobei das Verfahren umfasst:
Montieren (S10) der mehreren Batteriezellen (111), die pouchförmige Batteriezellen oder prismatische Batteriezellen sind, an der Vorrichtung (100, 200, 300) nach Anspruch 1 zum Durchführen des Drucktests an dem Batteriemodul;
wiederholtes Druckbeaufschlagen und Druckentlasten (S20) der mehreren Batteriezellen (111) in einer gleichen Richtung wie eine Aufblähungsrichtung unter Verwendung der Druckplatte (120) und Simulieren von Expansion und Kontraktion der mehreren Batteriezellen (111); und
Messen (S30) einer Zustandsänderung des Modulgehäuses (110) gemäß dem Druckbeaufschlagen und Druckentlasten der mehreren Batteriezellen (111),
**dadurch gekennzeichnet, dass**
das Messen (S30) der Zustandsänderung des Modulgehäuses (110) das Messen einer Zustandsänderung eines geschweißten Abschnitts (112) aufweist, der in dem Modulgehäuse (110) ausgebildet ist.

12. Verfahren nach Anspruch 11, wobei das Messen (S30) der Zustandsänderung des Modulgehäuses (110) das Messen einer Verschiebung des Modulgehäuses (110) gemäß dem Druckbeaufschlagen und Druckentlasten aufweist.

13. Verfahren nach Anspruch 11, ferner umfassend:
Laden und Entladen der mehreren Batteriezellen (111);
Messen einer Lade- und Entladeleistung der mehreren Batteriezellen (111) gemäß einer Druckbedingung; und
Ableiten eines optimalen Druckniveaus aus der Lade- und Entladeleistung.

## Revendications

1. Dispositif (100, 200, 300) pour effectuer un essai de pression sur un module de batterie, le dispositif (100, 200, 300) comprenant :
un boîtier de module (110) dans lequel une pluralité de cellules de batterie (111) sont placées, les cellules de batterie (111) étant des cellules de batterie de type poche ou des cellules de batterie prismatiques ;
une plaque de pression (120) installée dans une partie médiane du boîtier du module (110), dans un sens de la largeur, et configurée pour mettre sous pression la pluralité de cellules de batterie (111) en direction du boîtier du module (110) ;
une commande de pression (130) configurée pour exercer une pression sur la plaque de pression (120) ; et
un contrôleur (140) configuré pour réguler une force de pression et un régime de pression relativement à la pluralité de cellules de batterie (111),
la plaque de pression (120) étant configurée pour simuler l'expansion et la contraction de la pluralité de cellules de batterie (111) par la pressurisation et la dépressurisation répétées de la pluralité de cellules de batterie (111),
**caractérisé en ce que**
le dispositif (100, 200, 300) comprend en outre un testeur de fatigue de soudure (180) configuré pour tester un état d'une partie soudée (112) formée dans le boîtier du module (110).

2. Dispositif (100, 200, 300) selon la revendication 1, la plaque de pression (120) étant configurée pour effectuer la pressurisation et la dépressurisation de la pluralité de cellules de batterie (111) dans le même sens que celui d'un gonflement.

3. Dispositif (100, 200, 300) selon la revendication 1, la commande de pression (130) comprenant une pompe hydraulique (131) et un organe de pression (132) connecté à la pompe hydraulique (131) pour mettre sous pression la plaque de pression (120) et la pluralité de cellules de batterie (111).

4. Dispositif (100, 200, 300) selon la revendication 1, un coussinet tampon (150) étant disposé entre le boîtier du module (110) et une cellule de batterie (111) située dans une partie extérieure parmi la pluralité de cellules de batterie (111) installées dans le boîtier du module (110).

5. Dispositif (100, 200, 300) selon la revendication 1, comprenant en outre un capteur de pression (160) disposé dans une surface intérieure du boîtier du module (110) faisant face à au moins une de la pluralité de cellules de batterie (111) et configuré pour mesurer une pression appliquée sur le boîtier du module (110).

6. Dispositif (100, 200, 300) selon la revendication 1, un capteur de déplacement (170) étant situé à l'extérieur du boîtier du module (110) et configuré pour mesurer un déplacement du boîtier du module (110) d'après la pression.

7. Dispositif (100, 200, 300) selon la revendication 1, la plaque de pression (120) étant agencée comme deux ou plusieurs plaques de pression (120) disposées dans le sens de la longueur de la pluralité de cellules de batterie (111) pour mettre sous pression la pluralité de cellules de batterie (111) avec une même pression ou différentes pressions.

8. Dispositif (100, 200, 300) selon la revendication 3, l'organe de pression (132) étant agencé comme deux ou plusieurs organes de pression (132) disposés dans un sens de la longueur de la pluralité de cellules de batterie (111) afin de mettre sous pression la pluralité de cellules de batterie (111) avec une même pression ou différentes pressions.

9. Dispositif (100, 200, 300) selon la revendication 1, comprenant en outre une partie de charge/décharge (190) configurée pour charger et décharger la pluralité de cellules de batterie (111).

10. Dispositif (100, 200, 300) selon la revendication 9, la partie de charge/décharge (190) étant configurée pour mesurer un rendement de la charge / la décharge de la pluralité des cellules de batterie (111) selon une condition de pression.

11. Procédé d'exécution d'un essai de pression sur un module de batterie, le procédé comprenant :
le montage (S10) de la pluralité des cellules de batterie (111), à savoir des cellules de batterie du type poche ou des cellules de batterie prismatiques, sur le dispositif (100, 200, 300) selon la revendication 1 pour l'exécution de l'essai de pression sur le module de batterie ;
l'exécution répétée de la pressurisation et la dépressurisation (S20) de la pluralité de cellules de batterie (111) dans un même sens que celui du gonflement, en utilisant la plaque de pression (120) et en simulant l'expansion et la contraction de la pluralité de cellules de batterie (111); et
la mesure (S30) d'un changement d'état du boîtier du module (110) selon la pressurisation et la dépressurisation de la pluralité de cellules de batterie (111),
**caractérisé par**
la mesure (S30) du changement d'état du boîtier du module (110), y compris la mesure d'un changement d'état d'une partie soudée (112) formée dans le boîtier du module (110).

12. Procédé selon la revendication 11, la mesure (S30) du changement d'état du boîtier du module (110) comprenant la mesure d'un déplacement du boîtier du module (110) en fonction de la pressurisation et de la dépressurisation.

13. Procédé selon la revendication 11, comprenant en outre:
la charge et la décharge de la pluralité des cellules de batterie (111) ;
la mesure du rendement de la charge et de la décharge de la pluralité des cellules de batterie (111) d'après une condition de pression ; et
la dérivation d'un niveau de pression optimal d'après le rendement de la charge et de la décharge.
